**Europäisches Patentamt**

**European Patent Office**

**Office européen des brevets**

(19)

(11) Veröffentlichungsnummer : **0 531 561 B1**

(12) # EUROPÄISCHE PATENTSCHRIFT

(45) Veröffentlichungstag der Patentschrift :
**14.12.94 Patentblatt 94/50**

(51) Int. Cl.$^5$ : **H04Q 11/04**

(21) Anmeldenummer : **91115295.7**

(22) Anmeldetag : **10.09.91**

(54) **Verfahren zur Übertragung von Signalisierungszeichen zwischen digitalen Vermittlungsstellen.**

(43) Veröffentlichungstag der Anmeldung :
**17.03.93 Patentblatt 93/11**

(45) Bekanntmachung des Hinweises auf die
Patenterteilung :
**14.12.94 Patentblatt 94/50**

(84) Benannte Vertragsstaaten :
**AT BE CH DE ES FR GB GR IT LI LU NL SE**

(56) Entgegenhaltungen :
**EP-A- 0 125 605**
**DE-A- 3 139 019**
**ALTA FREQUENZA Bd. 39, Nr. 5, Mai 1970,**
**MILAN IT Seiten 375 - 380; S.R.TREVES: 'Com-**
**mon Channel Start-Stop Signalling Systems**
**for PCM Integrated Networks'**

(73) Patentinhaber : **SIEMENS**
**AKTIENGESELLSCHAFT**
**Wittelsbacherplatz 2**
**D-80333 München (DE)**

(72) Erfinder : **Rötz, Robert, Dipl.-Ing.**
**Hausmoning 23**
**W-8229 Ainring (DE)**
Erfinder : **Becker, Hans, Dipl.-Ing.**
**Ginsterweg 3**
**W-6695 Tholey (DE)**

## Beschreibung

Die Erfindung betrifft ein Verfahren zur Übertragung von Signalisierungszeichen zwischen digitalen Vermittlungsstellen gemäß den Merkmalen des Anspruchs 1.

In nationalen Fernsprechnetzen kommen zunehmend digitale Vermittlungsstellen, z.B. EWSD, zum Einsatz. Die Anpassung an die vorhandenen analogen Vermittlungsstellen erfolgt über Analog- Digital-Wandler und Multiplex-Einrichtungen. Die Umsetzung der Signalisierungszeichen (Leitungszeichen und Wahlziffern) bei der Zwischenamtssignalisierung geschieht in sogenannten Kennzeichenumwertern. Dabei wird der Zeichenvorrat und die Übertragungsgeschwindigkeit der Signalisierung durch die konventionelle analoge Vermittlungsstelle bestimmt.

Für die Signalisierverbindung von digitalen Vermittlungsstellen untereinander soll künftig der zentrale Zeichenkanal eingesetzt werden. Da dieser sehr teuer oder in der Übergangsphase noch nicht vorhanden ist, wird häufig die kanalgebundene Signalisierung (Channel Associated Signalling) wie bei konventionellen Vermittlungsstellen verwendet, obwohl die Übertragungsmöglichkeiten auf rein digitalen Strecken damit nicht ausgeschöpft sind. Das ist insbesondere dann nachteilig, wenn die Wahlziffern mit Hilfe des Verfahrens der Impulswahl übertragen werden, bei dem eine Wahlziffer in Form einer bestimmten Folge von Wahlimpulsen und Wahlpausen übertragen wird. Die Übertragungszeit beträgt dabei für jede Wahlziffer im Mittel 1 Sekunde.

Aus dem Dokument ALTA FREQUENZA, Bd. 39, Nr. 5, Mai 1970, Milan, IT; Seiten 375/380; S.R.TREVES ist ein Verfahren zur Übertragung von Signalisierungszeichen zwischen digitalen Vermittlungsstellen bekannt, bei dem die Wahlziffern im Sprachkanal übertragen werden.

Aus der deutschen Offenlegungsschrift DE-A-3 139 019 ist ein Verfahren zur Übertragung von Signalisierungszeichen zwischen digitalen Vermittlungsstellen gemäß dem Oberbegriff des Anspruchs 1 bekannt.

Der Erfindung liegt die Aufgabe zugrunde, die Übertragung der Signalisierungszeichen zwischen digitalen Vermittlungsstellen zu beschleunigen.

Diese Aufgabe wird durch die Merkmale des Anspruchs 1 gelöst.

Im folgenden wird ein Ausführungsbeispiel der Erfindung näher beschrieben.

Bei digitaler kanalgebundener Signalisierung mit Impulswahl werden die Wahlziffern als Einzelimpulse übertragen. Pro Wahlimpuls wird wie auf analogen Leitungen 60 ms lang das Bitmuster "Dial Pulse" und anschließend 40 ms lang das Bitmuster "Dial Pause" gesendet. Die Übertragungszeit für die Ziffer "0", die mit Hilfe von 10 Impulsen und 10 Pausen übertragen wird, beträgt somit 1000 ms.

Ein Grundgedanke der Erfindung besteht nun darin, statt des mehrmaligen Sendens der Bitmuster "Dial Pulse" bzw. "Dial Pause" möglichst nur ein Bitmuster zu senden, das bereits die gesamte Information für eine Wahlziffer beinhaltet.

Im Zeichenkanal (16.Kanal) eines PCM30-Übertragungssystems können bei kanalgebundener Signalisierung nur 4 Bit breite Signalisierungsinformationen übertragen werden, d.h. es sind nur 16 verschiedene Bitmuster und damit verschiedene Übertragungszeichen möglich. Das Bitmuster "0000" ist zudem aus technischen Gründen unzulässig. Damit dennoch 5 Leitungszeichen und die Wahlziffern "0" bis "15" codierbar sind, wird eine Wahlziffer in zwei aufeinanderfolgende Übertragungszeichen mit jeweils vier 4 Bit Länge übertragen.

Es folgt eine schematische Darstellung des ersten und zweiten Übertragungszeichens einer Wahlziffer:

```
1.  Übertragungs-Zeichen  :  Digit First Part
Bit a,b,c,d
     X X 1 1
                          Kennbit für kodierte Ziffernübertragung
                             "      "  Digit First Part
                          Bit  0 u.1 der Wahlziffer


2.  Übertragungs-Zeichen  :  Digit Second Part
Bit a,b,c,d
     X X 1 0
                          Kennbit für kodierte Ziffernübertragung
                             "      "  Digit Second Part
                          Bit 2  u.3 der Wahlziffer
```

EP 0 531 561 B1

Das erste Übertragungszeichen "Digit First Part" enthält Bit 0 und 1 der Wahlziffer plus 2 Kennbits. Das zweite Übertragungszeichen "Digit Second Part" enthält Bit 2 und 3 der Wahlziffer und ebenfalls zwei Kennbits. Die beiden Übertragungszeichen werden nacheinander im Abstand von 50 ms gesendet. Nach weiteren 50 ms kann die nächste Wahlziffer gesendet werden, so daß die Übertragungszeit pro Wahlziffer 100 ms beträgt.

Die Kennzeichnung der Übertragungszeichen für Wahlziffern durch ein Kennbit gewährleistet eine eindeutige Unterscheidung von den übrigen Leitungszeichen, so daß die Übertragung der Wahlziffern jederzeit durch Leitungszeichen unterbrochen werden kann.

Die Verwendung der Bits a, b, c, und d eines Übertragungszeichens ist abhängig von der Signalisierungsvariante (z.B. Loop-, E&M-, F6-Signalisierung), durch die die Bitmuster für die Leitungszeichen festgelegt sind.

Es folgt eine Darstellung der Leitungszeichen in Vorwärtsrichtung am Beispiel einer LOOP-Signalisierung:

```
Bit   a,b,c,d
      1 1 0 1        Idle
      0 1 0 1        Seizure
      1 1 0 1        Dial Pulse
      0 1 0 1        Dial Pause
      1 1 0 1        Clear Forward

      X X 1 1        Digit First Part      (c-Bit = Kennbit für
      X X 1 0        Digit Second Part      kodierte Wahl        )
```

Bei der oben dargestellten Signalisierungsvariante ergibt sich die Verwendung von Bit c als Kennbit für die codierte Wahlzifferübertragung.


**Patentansprüche**

1. Verfahren zur Übertragung von Signalisierungszeichen zwischen digitalen Vermittlungsstellen mit folgenden Merkmalen:
   a) es wird innerhalb eines kanalgebundenen Signalisierungssystems mit Impulswahl angewendet,
   b) die Signalisierungszeichen werden im Signalisierungskanal einer digitalen Übertragungsstrecke übertragen,
   c) die Signalisierungszeichen werden für die Übertragung in Übertragungszeichen codiert, die direkt den Signalisierungszeichen entsprechen,
   **gekennzeichnet durch**
   folgende Merkmale:
   d) ein Leitungszeichen wird in Form jeweils eines einzigen Übertragungszeichens übertragen,
   e) eine Wahlziffer wird in Form jeweils zweier aufeinanderfolgender Übertragungszeichen übertragen, wobei in jedem der beiden Übertragungszeichen jeweils wenigstens ein Bit zur Kennzeichnung des Übertragungszeichens als Informationsträger einer Wahlziffer dient.


**Claims**

1. Method for transmitting signalling signals between digital exchanges, having the following features:
   a) it is used within a channel-associated signalling system with pulse dialling,
   b) the signalling signals are transmitted in the signalling channel of a digital transmission link,
   c) for the transmission the signalling signals are encoded into transmission signals which correspond directly to the signalling signals,
   characterized by the following features:
   d) a line signal is transmitted in the form of a single transmission signal in each case,
   e) a dial digit is transmitted in the form of two successive transmission signals in each case, at least one bit serving in each case to identify the transmission signal as information carrier of a dial digit in each of the two transmission signals.

3

**Revendications**

1. Procédé pour transmettre des signaux de signalisation entre des centraux numériques, présentant les caractéristiques suivantes:

   a) on utilise ce procédé dans un système de signalisation lié à des canaux, avec une sélection d'impulsions,

   b) on transmet les signaux de signalisation dans le canal de signalisation d'une voie de transmission numérique,

   c) on code les signaux de signalisation, pour la transmission, en des signaux de transmission, qui correspondent directement aux signaux de signalisation,

   caractérisé par les caractéristiques suivantes:

   d) on transmet un signal de ligne sous la forme d'un signal unique de transmission,

   e) on transmet un chiffre de sélection respectivement sous la forme de deux signaux de transmission successifs, au moins un bit, dans chacun des deux signaux de transmission, servant à caractériser le signal de transmission en tant que support d'information d'un chiffre de sélection.